Europäisches Patentamt

European Patent Office

Office européen des brevets

(19)

(11) EP 0 527 982 B1

(12) **FASCICULE DE BREVET EUROPEEN**

(45) Date de publication et mention
de la délivrance du brevet:
**12.08.1998 Bulletin 1998/33**

(21) Numéro de dépôt: **92904912.0**

(22) Date de dépôt: **17.01.1992**

(51) Int Cl.⁶: **H01G 2/08**, H01G 4/38

(86) Numéro de dépôt international:
**PCT/FR92/00044**

(87) Numéro de publication internationale:
**WO 92/13355 (06.08.1992 Gazette 1992/21)**

(54) **SYSTEME D'ASSEMBLAGE DE CONDENSATEURS DE PUISSANCE EN BATTERIE**

ZUSAMMENBAUSYSTEM FÜR LEISTUNGSKONDENSATOREN ALS BATTERIE

BANK ASSEMBLY SYSTEM FOR POWER CAPACITORS

(84) Etats contractants désignés:
**BE DE ES GB IT SE**

(30) Priorité: **18.01.1991 FR 9100718**

(43) Date de publication de la demande:
**24.02.1993 Bulletin 1993/08**

(73) Titulaire: **Jakoubovitch, Albert**
**F-34600 Bedarieux (FR)**

(72) Inventeur: **Jakoubovitch, Albert**
**F-34600 Bedarieux (FR)**

(56) Documents cités:
**FR-A- 2 520 921**

- **IBM TECHNICAL DISCLOSURE BULLETIN,
  volume 13, no. 7, décembre 1970, (New York, US)
  B.E: Hart et al.: "Pluggable capacitor and
  receptacle", page 2106, voir l'article en entier**
- **Proceedings of the 6th Symposium on
  Engineering Problems of Fusion Research,**
- **San Diego, California, 18-21 novembre 175,
  IEEE, Piscataway, N.J. US; D. Markins et al.:
  "Fast risetime one megajoule capacitor bank",
  pages 330-335, voir page 333, figure 8; page 332,
  colonne 2, ligne 27 - page 333, colonne 1, ligne 14**

EP 0 527 982 B1

## Description

La présente invention concerne un moyen de constituer des batteries de condensateurs de puissance importantes destinées à fonctionner à des tensions comprises entre 200 et 2000 volts et capables de fournir des puissances de quelques centaines à quelques milliers de kVAr à des fréquences de quelques dizaines à quelques centaines de kHz.

Les techniques d'assemblage de condensateurs de puissance se heurtent à deux difficultés.

D'une part, lorsque l'on a affaire à des appareils dont la puissance unitaire est élevée, le raccordement de ces éléments à une plaque collectrice ne peut se faire sans introduire une inductance non souhaitée dont l'impédance peut être gênante.

Par exemple, un condensateur de 1 µF utilisé à 200 kHz, présentera une impédance de 0.8 ohms environ.

Pour que l'impédance des connexions puisse être considérée comme négligeable, il faudra qu'elle soit inférieure à 5 % environ de la valeur ci-dessus soit 0.04 ohms.

L'inductance correspondante, à la fréquence de 200 kHz, serait :

$$L = \frac{Z}{2\pi F} = \frac{0.04}{2\pi \times 200\,000} = 0.03 \; \mu H.$$

Une valeur d'inductance aussi basse est difficile à réaliser.

D'autre part, les courants circulants dans les condensateurs de grande puissance provoquent un champs magnétique important capable de provoquer un échauffement par induction des condensateurs voisins.

Le brevet FR-A-2 520 921 décrit un moyen de remédier à ces difficultés en utilisant 2 plaques métalliques (11 et 12) parallèles situées à faible distance l'une de l'autre et refroidit par circulation d'eau auxquelles sont raccordées les condensateurs élémentaires (15).

La présente invention permet à la fois d'améliorer et de simplifier le moyen décrit dans le brevet FR-A-2 520 921.

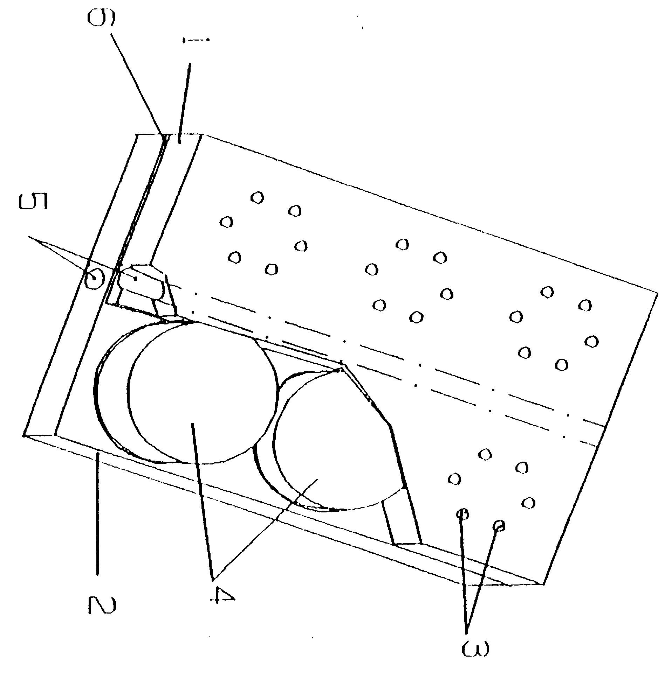

Elle sera décrite en se référant au dessin annexé qui ne constitue qu'un exemple possible de réalisation de l'invention.

La figure représente un assemblage selon l'invention dans lequel les plaques collectrices de courant (1) et (2) sont situées à faible distance l'une de l'autre, dans la pratique, d'une fraction de millimètre à quelques millimètres au maximum.

Chacun des condensateurs élémentaires (4) est logé dans deux demi alvéoles coaxiales au condensateur.

Les plaques collectrices (1) et (2) constituent à la fois les connexions de chacun des condensateurs de la batterie ainsi que le moyen d'assurer le refroidissement de la batterie grâce à un canal (5) percé dans chacune des plaques (1) et (2) et parcouru par un liquide réfrigérant.

Le faible espace (6) existant entre les plaques collectrices (1) et (2) a pour effet de réduire l'inductance parasite de la batterie et de confiner le champs magnétique dans l'espace (6) compris entre les deux plaques.

Le canal de refroidissement (5), pratiqué immédiatement au dessus du collecteur de courant, permet un refroidissement efficace à la fois de cette zone et des condensateurs individuels.

Il permet, grâce à un filetage qu'il est possible de pratiquer à chaque extrémités du canal (5), de raccorder un inducteur directement à la batterie.

Chacun des condensateurs (4) constituants la batterie est raccordé électriquement et thermiquement au fond de chaque alvéole. Ce raccordement est avantageusement effectué par soudure et, à cet effet, des trous (3) sont pratiqués au fond de chacune des alvéoles afin de faciliter l'opération de soudure.

L'excellent refroidissement permis par ce mode de construction, la possibilité de raccorder chaque condensateur à la batterie par l'intermédiaire de connexions extrêmement courtes, permettent la réduction de la taille des batteries de condensateurs ainsi constituées à moins de la moitié des batteries fabriquées selon l'art antérieur.

Sur le plan électrique, les mêmes raisons, c'est à dire la faible longueur des connexions a pour effet de réduire les pertes ohmiques provoquées par la circulation de courants intenses créés dans ce type de batterie.

Le faible espace (6) entre les deux plaques collectrices (1) et (2), la quasi absence de connexions entre chaque condensateur et la batterie ont en conséquence d'amener l'inductance parasite d'une telle batterie à des valeurs négligeables.

## Revendications

1. Dispositif d'assemblage de condensateurs élémentaires de puissance haute et moyenne fréquence en batterie mettant en oeuvre deux plaques métalliques situées à faible distance l'une de l'autre, refroidies par circulation d'eau et caractérisées en ce que chaque plaque se présente sous forme d'un bloc métallique (1, 2) percés d'alvéoles dans lesquelles sont logés les condensateurs élémentaires (4) et le canal de refroidissement (5), les bornes de chaque condensateur élémentaire étant reliées électriquement et thermiquement au fond de chaque alvéoles.

## Patentansprüche

1. Vorrichtung für den Zusammenbau von Batterien aus Hochleistungs-,Hoch- und Mittelfrequenz-Elementarkondensatoren unter Anwendung von zwei wassergekühlten, unweit voneinander angeordneten Metallplatten, dadurch gekennzeichnet, dass die jeweiligen Platten in Form eines Metallblocks (1,2), in welchem Aushöhlungen zum Aufnehmen der Elementarkondensatoren (4) und des Kühlkanals (5) geformt sind, ausgeführt ist, wobei die Anschlussklemmen der einzelnen Elementarkondensatoren elektrisch und thermisch am Boden jeder Aushöhlung verbunden sind.

**Claims**

1. A device for assembling high and medium frequency elementary power capacitors into banks by means of two water-cooled metal plates located at a small distance from each other, characterised in that each plate is formed as a metal block (1,2) in which recesses are cut out for receiving the elementary capacitors (4) and the cooling channel (5), the terminals of each elementary capacitor being electrically and thermally connected at the bottom of each recess.